# EUROPEAN PATENT SPECIFICATION

(11) **EP 4 494 852 B1**
(45) Date of publication and mention of the grant of the patent: **07.10.2026**
(21) Application number: 24189798.2
(22) Date of filing: 19.07.2024
(51) Int. Cl.: B29C 65/36, B29C 65/48, B29C 65/50, B29L 31/30

(54) **METHOD AND SYSTEM FOR JOINING THERMOPLASTIC COMPOSITE COMPONENTS**
VERFAHREN UND SYSTEM ZUM VERBINDEN VON THERMOPLASTISCHEN VERBUNDBAUTEILEN
PROCÉDÉ ET SYSTÈME POUR ASSEMBLER DES PIÈCES COMPOSITES THERMOPLASTIQUES

(30) Priority: 21.07.2023 US 202318224974
(43) Date of publication of application: 22.01.2025
(73) Proprietor: Rohr, Inc., Chula Vista, CA 91910-2098 (US)
(72) Inventor: van TOOREN, Michael, San Diego, 92122 (US)
(74) Representative: Dehns

(56) References cited:
- US-A- 3 900 360
- US-A- 5 444 220
- US-A1- 2020 214 090

## Description

### BACKGROUND OF THE INVENTION

### 1. Technical Field

The present disclosure relates to methods and apparatus for joining thermoplastic composite components together in general, and to methods and apparatus for welding thermoplastic composite components in particular.

### 2. Background Information

Current techniques for welding thermoplastic composite components typically utilize force applied to opposite sides of the components being joined to create a weld path and material collapse therein. In many instances, it is not possible to apply opposing force to the components to be joined - a scenario sometimes referred to as a "blind weld". In these instances, controlling the weld pool can be difficult and the probability of component collapse and/or excessive component deformation is increased. What is needed is a method and/or system that can be used to facilitate blind welds.

US 5444220 A discloses a prior art asymmetric induction work coil for thermoplastic welding.

US 3900360 A discloses a prior art self-heating composite bonding means and method.

US 2020/214090 A1 discloses a prior art printable susceptor for use in induction welding.

### SUMMARY

According to an aspect of the present invention, there is provided a method of welding a first thermoplastic composite component to a second thermoplastic composite component according to claim 1.

According to another aspect, there is provided a system for welding a first thermoplastic composite component to a second thermoplastic composite component according to claim 8.

Features of embodiments of the invention are set forth in the dependent claims.

### BRIEF DESCRIPTION OF THE DRAWINGS

FIG. 1 is a diagrammatic view of thermoplastic components.
FIG. 2 is a diagrammatic view of thermoplastic components to be joined, illustrating an embodiment of the present disclosure.
FIG. 3 is a diagrammatic view of thermoplastic components to be joined, illustrating an embodiment of the present disclosure.
FIG. 4 is a diagrammatic view of thermoplastic components to be joined, illustrating an embodiment of the present disclosure.
FIG. 5 is a diagrammatic view of thermoplastic components to be joined, illustrating an embodiment of the present disclosure.
FIG. 6 is a diagrammatic view of thermoplastic components to be joined, illustrating an embodiment of the present disclosure.
FIG. 7 is a graph of force versus time, diagrammatically illustrating present disclosure welding process data.

### DETAILED DESCRIPTION

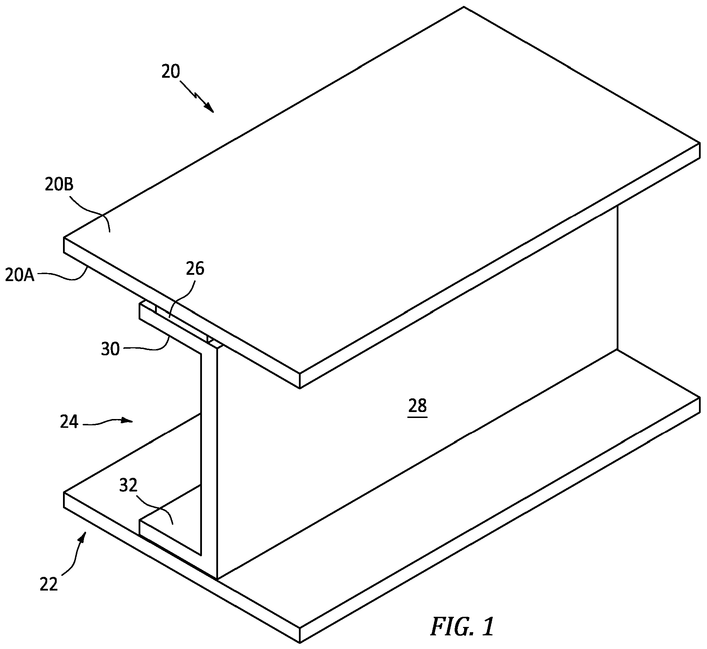

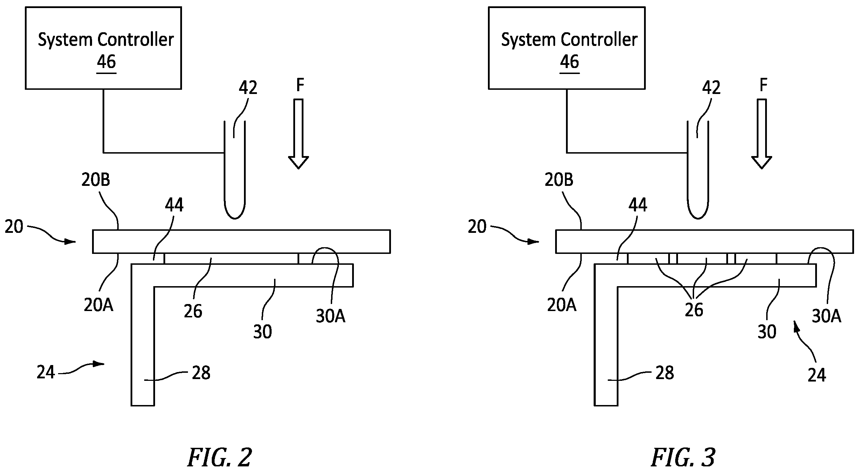

FIG. 1 diagrammatically illustrates a first component panel 20, a second component panel 22, a stiffener component ("stiffener 24"), and an interface layer 26. The stiffener 24 is U-shaped and includes a web 28 extending between a first flange 30 and a second flange 32. The second component panel 22 is attached to the second flange 32 of the stiffener 24. The present disclosure will be described herein in the context of attaching (e.g., welding) the first component panel 20 to the first flange 30 of the stiffener 24. The interface layer 26 is disposed between the components to be joined; i.e., between the first component panel 20 and the first flange 30. The respective surfaces of the first component panel 20 and the first flange 30 contiguous with the interface layer 26 may be referred to herein as the bonding surfaces 20A, 30A. The first component panel 20 includes an outer surface 20B opposite the bonding surface 20A and a thickness that extends therebetween. The components 20, 22, 24 shown in FIG. 1 are provided to illustrate an example of the present disclosure and the present disclosure is not limited to joining components like those shown in FIG. 1. FIGS. 2-4 diagrammatically illustrate a portion of the first component panel 20 and the stiffener first flange 30 where the two are to be joined together in various different embodiments. The present disclosure provides considerable utility in the production of aircraft components such as, but not limited to, fins, control surfaces, stabilizers, and the like.

The present disclosure is directed to a method and system for joining components that comprise one or more thermoplastic composite (TPC) materials. Each of the components may comprise the same TPC material(s) or may comprise different TPC materials; e.g., a first component comprising a first TPC material, a second component comprising a second TPC material that is different from the first TPC material, and so on. As will be detailed herein, in some embodiments, a component may include a plurality layers of different TPC materials. Non-limiting examples of thermoplastic materials that may be included within a TPC (e.g., as a matrix material or the like) include polyaryletherketone (PAEK), polyetheretherketone (PEEK), polyetherketoneketone (PEKK), polyetherimide (PEI), perfluoroalkopxy (PFA), polytetrafluoroethylene (PTFE), polyphenylene sulfide (PPS), and polyamide (PA - "nylon"), and variations thereof.

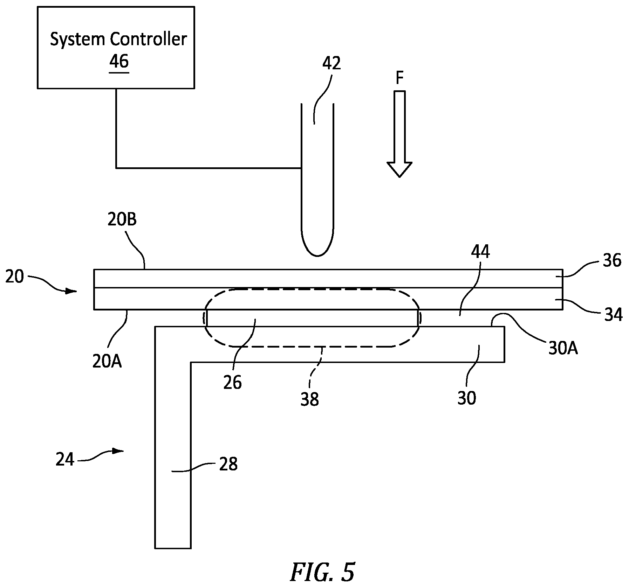

In some embodiments, at least one of the components to be joined may be described as having a first region 34 contiguous with the bonding surface and a second region 36 contiguous with the outer surface (e.g., see FIG. 5, showing a first component panel 20 having a first region 34 contiguous with the bonding surface 20A and a second region 36 contiguous with the outer surface 20B). The first and second regions 34, 36 may be configured to have different responses when subjected to the same or nearly the same amount of electromagnetic (EM) energy (e.g., an EM field). The first region 34 of the component may be described as having a first EM absorbing characteristic and the second region 36 of the component may be described as having a second EM absorbing characteristic, wherein the first region 34 may be configured to absorb EM energy faster than the second region 36 absorbs EM energy, or configured to absorb a greater amount of EM energy than the second region. For example and again referring to FIG. 5, the first region 34 contiguous with the bonding surface 20A is configured to reach a melting temperature before the second region 36 contiguous with the outer surface 20B reaches its melting temperature when both are subjected to the same or nearly the same amount of EM energy; e.g., the first region 34 reaches its melting temperature in a period of time T1, and the second region 36 reaches its melting temperature in a period of time T2, and T1 is less than T2 (when both are subjected to the same or nearly the same amount of EM energy). In this manner, the region of the component to be joined is configured to reach its melting temperature before the region of the component contiguous with the outer surface. It is our experience that the potential for surface deformation and/or component collapse increases as the component material approaches its melting temperature. Embodiments of the present disclosure facilitate the welding process and decrease the potential for surface deformation and/or component collapse.

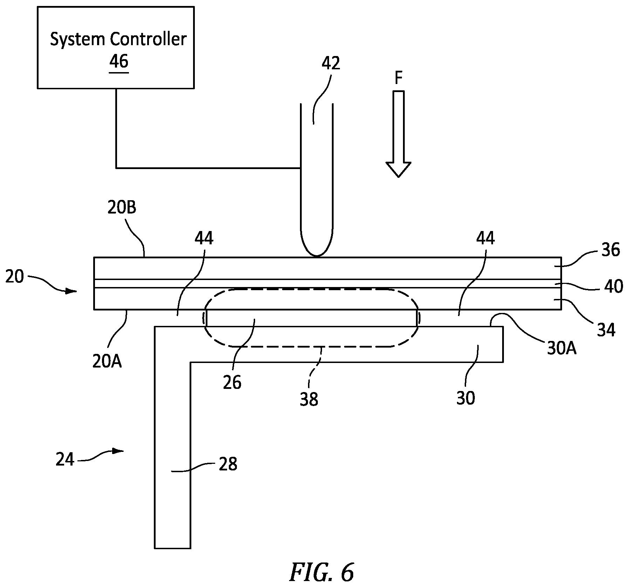

Referring to FIG. 6, in some embodiments a component to be joined (e.g., first component panel 20) may include a first region 34 contiguous with the bonding surface 20A, a second region 36 contiguous with the outer surface 20B, and an isolation region 40 disposed between the first and second regions 34, 36. In these embodiments, the component to be joined may have first and second regions 34, 36 that are configured to have substantially the same response when subjected to the same or nearly the same amount of EM energy (e.g., an EM field). Alternatively, the component to be joined may have first and second regions 34, 36 that are configured to have different responses when subjected to the same or nearly the same amount of EM energy (e.g., an EM field); i.e., as described above. The isolation region 40 may be configured to function as a thermally insulative region, or configured to function as an electrically insulative region, or both. In those embodiments wherein the isolation region 40 is configured to function as a thermally insulative region, the isolation region 40 is more thermally insulative than the first region 34, and may be more thermally insulative than both the first and second regions 34, 36. In those embodiments wherein the isolation region 40 is configured to function as an electrically insulative region, the isolation region 40 may be more electrically insulative than the first region 34, or the second region 36, or both.

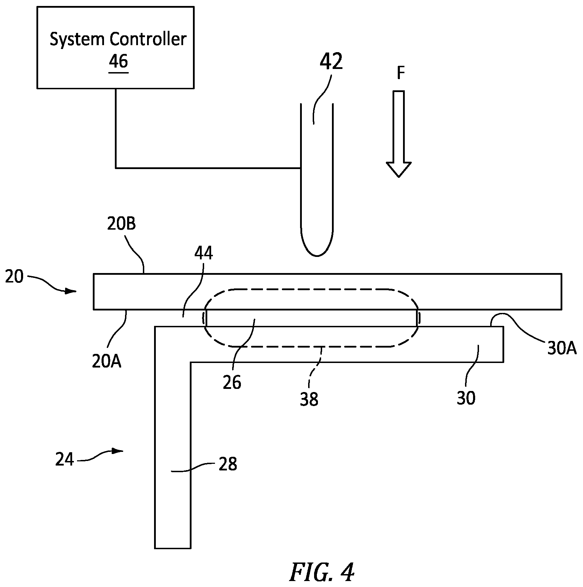

The interface layer 26 is typically configured to be present solely in the region between the components where the joining of the components is desired; i.e., the "bond region" (e.g., see dashed line 38 in FIG. 4). The interface layer 26 may be a single (i.e., unitary) body that is disposed throughout the bond region (e.g., see FIG. 2), or it may be a plurality of independent segments (e.g., strips) disposed within the bond region (e.g., see FIG. 3). In some embodiments, the interface layer 26 (as a unitary body or collectively as a plurality of strips) may be configured to occupy all or substantially all of the bond region prior to the joining process. In some embodiments, the interface layer 26 (as a unitary body or collectively as a plurality of strips) may be configured to occupy the all the bond region after the joining process. The interface layer 26 comprises at least one type of thermoplastic material. The interface layer 26 may have a homogenous configuration (e.g., the same thermoplastic material throughout), or it may include a fibrous material distributed within a thermoplastic material matrix (e.g., discontinuous fibers), or it may include a plurality of sublayers with different materials. A non-limiting example of an interface layer 26 with a plurality of sub-layers is one that includes a sub-layer comprising a mesh material, or a cloth material, or a screen material, or a layer of continuous fibers, or the like. The aforesaid fibrous material or sub-layer material may be electrically conductive, but is not required to be electrically conductive. Non-limiting examples of fiber material include ceramic, glass, metal, carbon, and the like. A non-limiting example of a screen material is one comprising a metallic material. In those embodiments wherein the interface layer 26 does include an electrically conductive material (e.g., carbon fibers, carbon fiber mesh, metallic screen, and the like), the interaction of the EM field with the aforesaid electrically conductive material may expedite the production of a weld pool.

The present disclosure utilizes an induction welding process that uses a source of electromagnetic (EM) energy (referred to hereinafter as an "inductor 42") to selectively subject the components to be joined to an EM field. The EM field interacting with the components 20, 26, 30 results in a thermal response within the components that elevates the temperature of the component portions to be joined. At the elevated temperature, portions of the components melt to produce a "weld pool" of component material. As the weld pool of material cools to a temperature below the melting temperature, the weld pool of material resolidifies and the components are joined; i.e., welded. The operating parameters of the inductor 42 (e.g., voltage, power, frequency, and the like) may be controlled to produce an EM field that is appropriate for joining the particular thermoplastic composite components; i.e., different operating parameters may be used for different thermoplastic composite materials, component configurations, and the like. In some embodiments, the inductor 42 may be configured to produce the requisite EM field throughout the bond region without relative movement between the components to be joined and the inductor 42; i.e., the inductor 42 and components remain static. In other embodiments, the present disclosure system may be configured to move the inductor 42 relative to the bond region to enable application of the EM field to all portions of the bond region, or the present disclosure system may be configured to move the components (and therefore the bond region) relative to the inductor 42 to enable application of the EM field to all portions of the bond region.

The present disclosure is configured to apply a force to one of the components to be joined during the welding process. The present disclosure contemplates several different mechanisms (i.e., force actuators) for applying the force to the component (e.g., first component panel 20). For example, in some embodiments force may be applied using a mechanical structure; e.g., a roller independent of the inductor 42. As another example, force may be applied using the inductor 42. The force may be applied as a point load (e.g., applied over a contact area relatively small in comparison to the area of bond region) or may be applied as a distributed load (e.g., applied uniformly over substantially all of the area of the bond region). In the FIGURES, the inductor 42 is diagrammatically shown as the force actuator, but the present disclosure is not limited thereto.

As stated above, prior art induction welding typically utilizes force applied to both sides of the components being joined to create a weld path and material collapse therein; e.g., a force applied to the outer surface 20B of the first component panel 20 and an opposing force applied to the side of the stiffener first flange 30 opposite the first flange bonding surface 30A. In those instances where it is not possible to apply force to both sides of the components to be joined (a "blind weld") there is often a greater chance of component collapse and/or excessive component deformation (e.g., resulting from excessive component melting) using prior art methods.

The present disclosure is configured to produce the appropriate amount of thermal energy necessary to create a weld pool at the bond region, and less thermal energy in component regions adjacent to the bond region, as well as an application of force from one side of the components to be joined. Using the components shown in FIG. 4 as a specific example, the present disclosure is configured to use the inductor 42 to provide an EM field that produces the appropriate amount of thermal energy necessary to create a weld pool within a bond region (diagrammatically indicated by the dashed line 38) that includes a portion of the first component panel 20, the interface layer 26, and a portion of the first flange 30 of the stiffener 24. The air disposed in the separation gap 44 (between the first component panel 20 and the first flange 30) adjacent to the sides of the interface layer 26 is a poor conductor of thermal energy. The interface layer 26, in contrast, increases in temperature as a result of the EM field application. Hence, the interface layer 26 is understood to act as a conduit of thermal energy with the first flange 30 of the stiffener 24. In this manner, a region of the first flange 30 where bonding is desired (i.e., aligned with the interface layer 26) is understood to reach the requisite melting temperature faster than adjacent regions of the first flange 30, thereby reducing the chance of component collapse and/or excessive component deformation. In addition to the beneficial thermal path associated with the interface layer 26, the interface layer 26 also facilitates intimate contact between the components 20, 26, 30. As indicated above, the present disclosure includes an application of force to the first component panel 20. During the bonding process, the application of force to the first component panel 20 causes the melted interface layer 26 to collapse between the first component panel 20 and the first flange 30. As a result, the probability of intimate contact between the interface layer 26 and the first component panel 20 and between the interface layer 26 and the first flange 30 is increased. This aspect is particularly beneficial in those instances when component tolerances and/or surface irregularities may otherwise compromise the bonding process.

As stated above, in some embodiments a component to be joined (e.g., the first component panel 20 as shown in FIG. 5) includes a first region 34 and a second region 36 that are configured to have different responses when subjected to the same or nearly the same amount of EM energy (e.g., an EM field); e.g., a first region 34 contiguous with the bonding surface 20A that is configured to reach a melting temperature before a second region 36 contiguous with the outer surface 20B reaches its melting temperature when both are subjected to the same or nearly the same amount of EM energy. In these embodiments, the creation of a weld pool in the bonding region may be facilitated by the faster melting first region 34. At the same time, the relatively lesser response to the EM field by the second region 36 helps to prevent or mitigate the potential for deformation of the exposed outer surface 20B of the component 20. The combination of the interface layer 26 and the first region 34 of the first component panel 20 is understood to produce an improved bond between the components; e.g., the first component panel 20 and the first flange 30.

As stated above, in some embodiments a component to be joined (e.g., the first component panel 20 as shown in FIG. 6) includes a first region 34 (contiguous with the bonding surface 20A) and a second region 36 (contiguous with the outer surface 20B), separated from one another by an isolation region 40. The isolation region 40 may be configured to function as a thermally insulative region, or configured to function as an electrically insulative region, or both. **In** these embodiments, the creation of a weld pool in the bonding region may be facilitated by the isolation region 40. The isolation region 40 (configured to function as a thermally insulative region, or an electrically insulative region, or both) functions to separate the thermal responses of the first region 34 and the second region 36 to the EM field. In this manner, a greater thermal response in the first region 34 (e.g., faster melting than the second region 36) is separated from the thermal response in the second region 36. The isolated response to the EM field by the second region 36 may prevent or mitigate the potential for deformation of the exposed outer surface 20B of the component (e.g., first component panel 20). The isolation region 40 may be particularly beneficial in those instances wherein the first region 34 and the second region 36 are configured to have different responses when subjected to the same or nearly the same amount of EM energy (e.g., an EM field); e.g., the first region 34 configured to reach a melting temperature before the second region 36 when both are subjected to the same or nearly the same amount of EM energy.

According to an aspect of the present disclosure, a method of monitoring the welding process between the components (e.g., first component panel 20 and stiffener first flange 30) is provided. In these embodiments, the present disclosure system may include the inductor 42 as detailed herein, a system controller 46, and sensors (e.g., pressure sensor, temperature sensor, and the like). In some embodiments, the system may include a visual display device (not shown) configured to display information related to the bonding process as will be described herein.

The system controller 46 is in communication with other components within the system, such as the inductor 42 and the sensors. In those embodiments that include a display device, the system controller 46 is also in communication with the display device. The system controller 46 may be in communication with these components to control and/or receive signals therefrom to perform the functions described herein. The system controller 46 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the system to accomplish the same algorithmically and/or coordination of system components. The system controller 46 includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The system controller may include, or may be in communication with, an input device that enables a user to enter data and/or instructions, and may include, or be in communication with, an output device configured, for example to display information (e.g., a visual display device as indicated above or a printer), or to transfer data, etc. Communications between the system controller 46 and other system components may be via a hardwire connection or via a wireless connection.

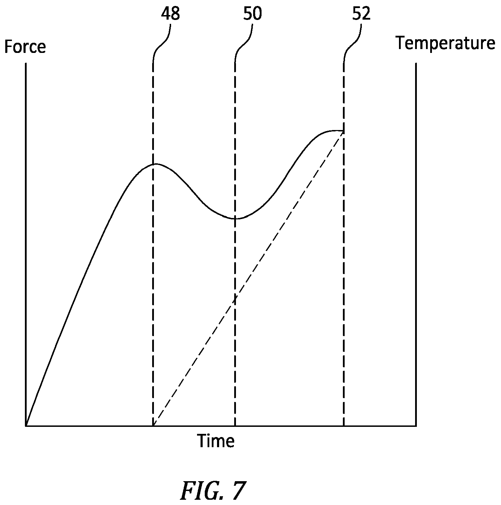

FIG. 7 diagrammatically illustrates a graph of force (vertical axis) versus time (horizontal axis). Temperature is also indicated on a vertical axis. The graphed data indicates a welding process start point (e.g., at the graph origin). From the start of the welding process, the applied EM field causes an increase in temperature of at least portions of the first and second component and the interface layer 26. At the same time, the amount of force applied to the first component is increased. The graphed data further indicates a first inflection point 48 indicative of a starting point of plastic deformation associated with the welding process; e.g., plastic deformation of a portion of the first component panel 20, or a portion of the first flange 30 of the stiffener 24, or the interface layer 26, or some combination thereof. The graphed data further indicates a second inflection point 50 that indicates a minimum thickness of the interface layer 26 has been achieved. At the second inflection point 50, the interface layer 26 has melted and dispersed; e.g., the interface layer 26 is in intimate contact with the bonding surfaces of the first and second components; e.g., the bonding surfaces 20A, 30A of the first component panel 20 and the first flange 30 of the stiffener 24. The data curve portion between the first and second inflection points 48, 50 is representation of the interface layer 26 melting and dispersing between the first and second components as a result of the application of the EM field by the inductor 42 and the force applied to the first component panel 20. The graphed data indicates a third point inflection 52 point wherein the sensed force plateaus. The third inflection point 52 is indicative of the welding process being completed. In some present disclosure embodiments, the data represented in the graph may be used to control the welding process; e.g., the system may be configured to recognize the inflection points 48, 50, 52. Once the data indicates that the welding process is complete, the inductor 42 may be controlled to stop producing the EM field (or at least decreasing the EM field to a level wherein no further melting of the components occurs) and the components can be allowed to cool. In this manner, the welding process of a "blind weld" can be monitored to improve weld production and consistency. The graph shown in FIG. 7 is an example (e.g., a visual example) of how data can be used to monitor the welding process. The present disclosure does not require a visual implementation of process like that shown in FIG. 7.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claim. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A method of welding a first thermoplastic composite component (20) to a second thermoplastic composite component (24), wherein the first thermoplastic composite component (20) has a thickness that extends between an outer surface (20B) and an opposite first thermoplastic composite bonding surface (20A), and the second thermoplastic composite component (24) has a second thermoplastic composite bonding surface (30A), wherein an interface layer (26) is disposed between the first thermoplastic composite bonding surface (20A) and the second thermoplastic composite bonding surface (30A), the method comprising:
applying a normal force to the outer surface (20B) of the first thermoplastic composite component (20) without an application of an opposing second normal force to the second thermoplastic component (24);
applying an electromagnetic field to at least portions of the first thermoplastic composite component (20), the second thermoplastic composite component (24), and the interface layer (26) while the normal force is applied, the applied electromagnetic field configured to create a weld pool;
determining a first inflection point (48) of the applied normal force, a second inflection point (50) of the applied normal force, wherein the applied normal force decreases between the first inflection point (48) and the second inflection point (50), and a third inflection point (52) whereafter the applied normal force becomes substantially constant; and
removing the applied electromagnetic field to permit the weld pool to solidify upon determining the third inflection point (52).

2. The method of claim 1, wherein the first thermoplastic composite component (20) includes a first region (34) contiguous with the bonding surface (20A) and a second region (36) contiguous with the outer surface (20B);
wherein the first region (34) is configured to have a first response when subjected to the electromagnetic field, and the second region (36) is configured to have a second response when subjected to the electromagnetic field, and the first response is different from the second response.

3. The method of claim 2, wherein the first response includes reaching a melting temperature of the first region (34) in a period of time T1, and the second response includes reaching a melting temperature of the second region (36) in a period of time T2, and T1 is less than T2.

4. The method of any preceding claim, wherein the first thermoplastic composite component (20) includes a first region (34) contiguous with the bonding surface (20A), a second region (36) contiguous with the outer surface (20B), and an isolation region (40) disposed between the first region (34) and the second region (36);
wherein the isolation region (40) is configured to be more thermally insulative than the first region (34).

5. The method of claim 4, wherein the isolation region (40) is configured to be more thermally insulative than both the first region (34) and the second region (36).

6. The method of claim 4 or 5, wherein the first region (FR) (34) is configured to reach an FR melting temperature in a period of time T1, and the second region (SR) (36) is configured to reach a SR melting temperature in a period of time T2, and T1 is less than T2.

7. The method of any preceding claim, wherein the first thermoplastic composite component (20) includes a first region (34) contiguous with the bonding surface (20A), a second region (36) contiguous with the outer surface (20B), and an isolation region (40) disposed between the first region (34) and the second region (36);
wherein the isolation region (40) is configured to be more electrically insulative than the first region (34), or the second region (36), or both.

8. A system for welding a first thermoplastic composite component (20) to a second thermoplastic composite component (24), wherein the first thermoplastic composite component (20) has a thickness that extends between an outer surface (20B) and an opposite first thermoplastic composite bonding surface (20A), and the second thermoplastic composite component (24) has a second thermoplastic composite bonding surface (30A), wherein an interface layer (26) is disposed between the first thermoplastic composite bonding surface (20A) and the second thermoplastic composite bonding surface (30A), the system comprising:
a force actuator configured to apply a normal force to the outer surface (20B) of the first thermoplastic composite component (20) without an application of an opposing second normal force to the second thermoplastic component (24);
an electromagnetic inductor (42) configured to selectively produce an electromagnetic field sufficiently to melt at least portions of the first thermoplastic composite component (20), the second thermoplastic composite component (24), and the interface layer (26); and
a system controller (46) in communication with the force actuator, the electromagnetic inductor (42), and a non-transitory memory storing instructions, which instructions when executed cause the system controller (46) to:
control the force actuator to apply a normal force to the outer surface (20B) of the first thermoplastic composite component (20) without an application of an opposing second normal force to the second thermoplastic component (24);
control the electromagnetic inductor (42) to apply an electromagnetic field to at least portions of the first thermoplastic composite component (20), the second thermoplastic composite component (24), and the interface layer (26) while the normal force is applied, the applied electromagnetic field configured to create a weld pool;
determine a first inflection point (48) of the applied normal force, a second inflection point (50) of the applied normal force, wherein the applied normal force decreases between the first inflection point (48) and the second inflection point (50), and a third inflection point (52) whereafter the applied normal force becomes substantially constant; and
control the electromagnetic inductor (42) to remove the applied electromagnetic field to permit the weld pool to solidify upon determining the third inflection point (52).

## Patentansprüche

1. Verfahren zum Anschweißen eines ersten thermoplastischen Verbundbauteils (20) an ein zweites thermoplastisches Verbundbauteil (24), wobei das erste thermoplastische Verbundbauteil (20) eine Dicke aufweist, die sich zwischen einer äußeren Oberfläche (20B) und einer gegenüberliegenden ersten thermoplastischen Verbundverbindungsoberfläche (20A) erstreckt, und das zweite thermoplastische Verbundbauteil (24) eine zweite thermoplastische Verbundverbindungsoberfläche (30A) aufweist, wobei eine Zwischenschicht (26) zwischen der ersten thermoplastischen Verbundverbindungsoberfläche (20A) und der zweiten thermoplastischen Verbundverbindungsoberfläche (30A) angeordnet ist, das Verfahren umfassend:
Anwenden einer Normalkraft auf die äußere Oberfläche (20B) des ersten thermoplastischen Verbundbauteils (20) ohne eine Anwendung einer entgegengesetzten zweiten Normalkraft auf das zweite thermoplastische Bauteil (24);
Anwenden eines elektromagnetischen Feldes auf mindestens Abschnitte des ersten thermoplastischen Verbundbauteils (20), des zweiten thermoplastischen Verbundbauteils (24) und der Zwischenschicht (26), während die Normalkraft angewendet ist, wobei das angewendete elektromagnetische Feld ausgelegt ist, um ein Schweißbad zu bilden;
Bestimmen eines ersten Wendepunkts (48) der angewendeten Normalkraft, eines zweiten Wendepunkts (50) der angewendeten Normalkraft, wobei die angewendete Normalkraft zwischen dem ersten Wendepunkt (48) und dem zweiten Wendepunkt (50) abnimmt, und eines dritten Wendepunkts (52), nach welchem die angewendete Normalkraft im Wesentlichen konstant wird; und
Entfernen des angewendeten elektromagnetischen Feldes, um dem Schweißbad ein Erstarren zu ermöglichen, nach Bestimmen des dritten Wendepunkts (52).

2. Verfahren nach Anspruch 1, wobei das erste thermoplastische Verbundbauteil (20) einen ersten Bereich (34) angrenzend an die Verbindungsoberfläche (20A) und einen zweiten Bereich (36) angrenzend an die äußere Oberfläche (20B) beinhaltet;
wobei der erste Bereich (34) zum Aufweisen einer ersten Reaktion ausgelegt ist, wenn er dem elektromagnetischen Feld ausgesetzt ist, und der zweite Bereich (36) zum Aufweisen einer zweiten Reaktion ausgelegt ist, wenn er dem elektromagnetischen Feld ausgesetzt ist, und die erste Reaktion sich von der zweiten Reaktion unterscheidet.

3. Verfahren nach Anspruch 2, wobei die erste Reaktion das Erreichen einer Schmelztemperatur des ersten Bereichs (34) in einer Zeitspanne T1 beinhaltet und die zweite Reaktion das Erreichen einer Schmelztemperatur des zweiten Bereichs (36) in einer Zeitspanne T2 beinhaltet und T1 weniger als T2 ist.

4. Verfahren nach einem der vorhergehenden Ansprüche, wobei das erste thermoplastische Verbundbauteil (20) einen ersten Bereich (34) angrenzend an die Verbindungsoberfläche (20A), einen zweiten Bereich (36) angrenzend an die äußere Oberfläche (20B) und einen Isolationsbereich (40) beinhaltet, der zwischen dem ersten Bereich (34) und dem zweiten Bereich (36) angeordnet ist; wobei der Isolationsbereich (40) ausgelegt ist, um wärmeisolierender als der erste Bereich (34) zu sein.

5. Verfahren nach Anspruch 4, wobei der Isolationsbereich (40) ausgelegt ist, um wärmeisolierender als sowohl der erste Bereich (34) als auch der zweite Bereich (36) zu sein.

6. Verfahren nach Anspruch 4 oder 5, wobei der erste Bereich (FR) (34) ausgelegt ist, um eine FR-Schmelztemperatur in einer Zeitspanne T1 zu erreichen, und der zweite Bereich (SR) (36) ausgelegt ist, um eine SR-Schmelztemperatur in einer Zeitspanne T2 zu erreichen, und T1 weniger als T2 ist.

7. Verfahren nach einem der vorhergehenden Ansprüche, wobei das erste thermoplastische Verbundbauteil (20) einen ersten Bereich (34) angrenzend an die Verbindungsoberfläche (20A), einen zweiten Bereich (36) angrenzend an die äußere Oberfläche (20B) und einen Isolationsbereich (40) beinhaltet, der zwischen dem ersten Bereich (34) und dem zweiten Bereich (36) angeordnet ist; wobei der Isolationsbereich (40) ausgelegt ist, um elektrisch isolierender als der erste Bereich (34) oder der zweite Bereich (36) oder beide zu sein.

8. System zum Anschweißen eines ersten thermoplastischen Verbundbauteils (20) an ein zweites thermoplastisches Verbundbauteil (24), wobei das erste thermoplastische Verbundbauteil (20) eine Dicke aufweist, die sich zwischen einer äußeren Oberfläche (20B) und einer gegenüberliegenden ersten thermoplastischen Verbundverbindungsoberfläche (20A) erstreckt, und das zweite thermoplastische Verbundbauteil (24) eine zweite thermoplastische Verbundverbindungsoberfläche (30A) aufweist, wobei eine Zwischenschicht (26) zwischen der ersten thermoplastischen Verbundverbindungsoberfläche (20A) und der zweiten thermoplastischen Verbundverbindungsoberfläche (30A) angeordnet ist, das System umfassend:
einen Kraftaktor, der ausgelegt ist, um eine Normalkraft auf die äußere Oberfläche (20B) des ersten thermoplastischen Verbundbauteils (20) ohne eine Anwendung einer entgegengesetzten zweiten Normalkraft auf das zweite thermoplastische Bauteil (24) anzuwenden;
einen elektromagnetischen Induktor (42), der ausgelegt ist, um selektiv ein elektromagnetisches Feld zu erzeugen, das ausreichend ist, um mindestens Abschnitte des ersten thermoplastischen Verbundbauteils (20), des zweiten thermoplastischen Verbundbauteils (24) und der Zwischenschicht (26) zu schmelzen; und
eine Systemsteuerung (46) in Kommunikation mit dem Kraftaktor, dem elektromagnetischen Induktor (42) und einem Anweisungen speichernden nicht flüchtigen Speicher, wobei die Anweisungen, wenn sie ausgeführt werden, die Systemsteuerung (46) zu Folgendem veranlassen:
Steuern des Kraftaktors zum Anwenden einer Normalkraft auf die äußere Oberfläche (20B) des ersten thermoplastischen Verbundbauteils (20) ohne eine Anwendung einer entgegengesetzten zweiten Normalkraft auf das zweite thermoplastische Bauteil (24);
Steuern des elektromagnetischen Induktors (42) zum Anwenden eines elektromagnetischen Feldes auf mindestens Abschnitte des ersten thermoplastischen Verbundbauteils (20), des zweiten thermoplastischen Verbundbauteils (24) und der Zwischenschicht (26), während die Normalkraft angewendet ist, wobei das angewendete elektromagnetische Feld ausgelegt ist, um ein Schweißbad zu bilden;
Bestimmen eines ersten Wendepunkts (48) der angewendeten Normalkraft, eines zweiten Wendepunkts (50) der angewendeten Normalkraft, wobei die angewendete Normalkraft zwischen dem ersten Wendepunkt (48) und dem zweiten Wendepunkt (50) abnimmt, und eines dritten Wendepunkts (52), nach welchem die angewendete Normalkraft im Wesentlichen konstant wird; und
Steuern des elektromagnetischen Induktors (42) zum Entfernen des elektromagnetischen Feldes, um dem Schweißbad ein Erstarren zu ermöglichen, nach Bestimmen des dritten Wendepunkts (52).

## Revendications

1. Procédé de soudage d'un premier composant composite thermoplastique (20) à un second composant composite thermoplastique (24), dans lequel le premier composant composite thermoplastique (20) présente une épaisseur qui s'étend entre une surface extérieure (20B) et une première surface de liaison (20A) composite thermoplastique opposée, et le second composant composite thermoplastique (24) présente une seconde surface de liaison (30A) composite thermoplastique, dans lequel une couche d'interface (26) est disposée entre la première surface de liaison (20A) composite thermoplastique et la seconde surface de liaison (30A) composite thermoplastique, le procédé comprenant :
l'application d'une force normale sur la surface extérieure (20B) du premier composant composite thermoplastique (20) sans l'application d'une seconde force normale opposée au second composant thermoplastique (24) ;
l'application d'un champ électromagnétique à au moins des parties du premier composant composite thermoplastique (20), du second composant composite thermoplastique (24) et de la couche d'interface (26) pendant que la force normale est appliquée, le champ électromagnétique appliqué étant configuré pour créer un bain de soudure ;
la détermination d'un premier point d'inflexion (48) de la force normale appliquée, d'un deuxième point d'inflexion (50) de la force normale appliquée, dans lequel la force normale appliquée diminue entre le premier point d'inflexion (48) et le deuxième point d'inflexion (50), et d'un troisième point d'inflexion (52) après lequel la force normale appliquée devient sensiblement constante ; et
la suppression du champ électromagnétique appliqué pour permettre au bain de soudure de se solidifier lors de la détermination du troisième point d'inflexion (52).

2. Procédé selon la revendication 1, dans lequel le premier composant composite thermoplastique (20) comporte une première région (34) contiguë à la surface de liaison (20A) et une seconde région (36) contiguë à la surface extérieure (20B) ;
dans lequel la première région (34) est configurée pour présenter une première réponse lorsqu'elle est soumise au champ électromagnétique, et la seconde région (36) est configurée pour présenter une seconde réponse lorsqu'elle est soumise au champ électromagnétique, et la première réponse est différente de la seconde réponse.

3. Procédé selon la revendication 2, dans lequel la première réponse comporte l'atteinte d'une température de fusion de la première région (34) dans un délai T1, et la seconde réponse comporte l'atteinte d'une température de fusion de la seconde région (36) dans un délai T2, et T1 est inférieur à T2.

4. Procédé selon une quelconque revendication précédente, dans lequel le premier composant composite thermoplastique (20) comporte une première région (34) contiguë à la surface de liaison (20A), une seconde région (36) contiguë à la surface extérieure (20B), et une région d'isolation (40) disposée entre la première région (34) et la seconde région (36) ;
dans lequel la région d'isolation (40) est configurée pour être plus isolante thermiquement que la première région (34).

5. Procédé selon la revendication 4, dans lequel la région d'isolation (40) est configurée pour être plus isolante thermiquement qu'à la fois la première région (34) et la seconde région (36).

6. Procédé selon la revendication 4 ou la revendication 5, dans lequel la première région (FR) (34) est configurée pour atteindre une température de fusion FR dans un délai T1, et la seconde région (SR) (36) est configurée pour atteindre une température de fusion SR dans un délai T2, et T1 est inférieur à T2.

7. Procédé selon une quelconque revendication précédente, dans lequel le premier composant composite thermoplastique (20) comporte une première région (34) contiguë à la surface de liaison (20A), une seconde région (36) contiguë à la surface extérieure (20B), et une région d'isolation (40) disposée entre la première région (34) et la seconde région (36) ;
dans lequel la région d'isolation (40) est configurée pour être plus isolante électriquement que la première région (34), ou la seconde région (36), ou les deux.

8. Système de soudage d'un premier composant composite thermoplastique (20) à un second composant composite thermoplastique (24), dans lequel le premier composant composite thermoplastique (20) présente une épaisseur qui s'étend entre une surface extérieure (20B) et une première surface de liaison (20A) composite thermoplastique opposée, et le second composant composite thermoplastique (24) présente une seconde surface de liaison (30A) composite thermoplastique, dans lequel une couche d'interface (26) est disposée entre la première surface de liaison (20A) composite thermoplastique et la seconde surface de liaison (30A) composite thermoplastique, le système comprenant :
un actionneur de force configuré pour appliquer une force normale sur la surface extérieure (20B) du premier composant composite thermoplastique (20) sans l'application d'une seconde force normale opposée au second composant thermoplastique (24) ;
un inducteur électromagnétique (42) configuré pour produire sélectivement un champ électromagnétique suffisant pour fondre au moins des parties du premier composant composite thermoplastique (20), du second composant composite thermoplastique (24) et de la couche d'interface (26) ; et
un dispositif de commande de système (46) en communication avec l'actionneur de force, l'inducteur électromagnétique (42) et une mémoire non transitoire stockant des instructions, lesquelles instructions, lorsqu'elles sont exécutées, amènent le dispositif de commande de système (46) à :
commander un actionneur de force pour appliquer une force normale sur la surface extérieure (20B) du premier composant composite thermoplastique (20) sans l'application d'une seconde force normale opposée au second composant thermoplastique (24) ;
commander l'inducteur électromagnétique (42) pour appliquer un champ électromagnétique à au moins des parties du premier composant composite thermoplastique (20), du second composant composite thermoplastique (24) et de la couche d'interface (26) pendant que la force normale est appliquée, le champ électromagnétique appliqué étant configuré pour créer un bain de soudure ;
déterminer un premier point d'inflexion (48) de la force normale appliquée, un deuxième point d'inflexion (50) de la force normale appliquée, dans lequel la force normale appliquée diminue entre le premier point d'inflexion (48) et le deuxième point d'inflexion (50), et un troisième point d'inflexion (52) après lequel la force normale appliquée devient sensiblement constante ; et
commander l'inducteur électromagnétique (42) pour supprimer le champ électromagnétique appliqué afin de permettre au bain de soudure de se solidifier lors de la détermination du troisième point d'inflexion (52).
